(19) **Europäisches Patentamt**
**European Patent Office**
**Office européen des brevets**

(11) **EP 4 561 012 A1**

(12) **EUROPEAN PATENT APPLICATION**
published in accordance with Art. 153(4) EPC

(43) Date of publication:
**28.05.2025 Bulletin 2025/22**

(21) Application number: **22951917.8**

(22) Date of filing: **19.07.2022**

(51) International Patent Classification (IPC):
**H04L 47/283** (2022.01)

(52) Cooperative Patent Classification (CPC):
**H04L 47/283**

(86) International application number:
**PCT/JP2022/028066**

(87) International publication number:
**WO 2024/018528 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi Astemo, Ltd.
Ibaraki 312-8503 (JP)**

(72) Inventor: **HORI Wataru
Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **ONBOARD COMMUNICATION SYSTEM AND ONBOARD COMMUNICATION METHOD**

(57) The present disclosure proposes an onboard communication system that consecutively transmits data including a plurality of frames from a sender device to a receiver device in a communication at one time to allow reducing an occurrence of a data loss in the receiver side. In the onboard communication system, the sender device executes a process of performing an initial communication with the receiver device and confirming a response time of the receiver device, a process of determining a format of the consecutive transmission of the data to the receiver device based on the response time, and a process of consecutively transmitting the data to the receiver device in units of frame according to the determined format of the consecutive transmission (see Fig. 2).

Fig. 2

**Description**

Technical Field

The present disclosure relates to an onboard communication system and an onboard communication method.

Background Art

In an onboard control system, for example, during a reprogramming process, a consecutive data transmission process from a reprogramming tool (program writing device) to an ECU (Electronic Control Unit) is executed. Recently, to enhance security, a case in which large amounts of data are transmitted not only from the tool but also from the ECU to the tool and another ECU (consecutive transmission in units of frame) has increased.

For example, Non Patent Literature 1 specifies that a transmission interval at consecutive data transmission is preliminarily determined to any fixed value corresponding to a model of a receiver device before establishing a communication between a sender side and the receiver side, and the consecutive transmission process is executed at the transmission interval of the fixed value.

Citation List

Non Patent Literature

Non Patent Literature 1: ISO 15765-2 Third edition 2016-04-01, "Road vehicles - Diagnostic communication over Controller Area Network (DoCAN) - Part 2: Transport protocol and network layer services"

Summary of Invention

Technical Problem

However, when the consecutive transmission process is performed at the fixed transmission interval determined before the communication start as specified in the technique of ISO 15765-2, a reception process is not able to keep up when a processing load of the receiver device is high, thus causing a loss of the transmitted data in some cases.

The present disclosure proposes, in consideration of such a situation, a technique capable of reducing occurrence of data loss in a receiver side.

Solution to Problem

To solve the above-described problem, the present disclosure proposes, as an example, an onboard communication system that consecutively transmits data including a plurality of frames from a sender device to a receiver device in a communication at one time. The sender device executes a process of performing an initial communication with the receiver device and confirming a response time of the receiver device, a process of determining a format of the consecutive transmission of the data to the receiver device based on the response time; and a process of consecutively transmitting the data to the receiver device in units of frame according to the determined format of the consecutive transmission.

Further features related to the present disclosure will become clear from the description in this document and the attached drawings. In addition, the manner of this disclosure is achieved and realized by the manner of the elements and the combination of various elements and the detailed description and the attached claims.

The descriptions in this document are merely typical examples, and in no way limit the scope of the claims or examples of application of this disclosure.

Advantageous Effects of Invention

The technique of the present disclosure can reduce the occurrence of data loss in the receiver side.

Brief Description of Drawings

Fig. 1 is a drawing illustrating a schematic configuration example of an onboard communication system 100 according to the embodiment.

Fig. 2 is a drawing for describing an outline of transmission interval determination at a consecutive data transmission according to the embodiment.

Fig. 3 is a flowchart for describing a consecutive transmission process according to the embodiment in detail.

Fig. 4 is a drawing illustrating an example of storage formats of respective parameters in a storage device (for example, EEPROM 10113) of a sender side 201.

Fig. 5 is a drawing illustrating a current required response time (required response time 203 from FirstFrame transmission to FlowControl reception) and a current transmission interval (transmission interval 204 at consecutive data transmission) determined from the formula (1).

Fig. 6 is a flowchart for describing a consecutive transmission process including a recalculation process and a storing process of an average value of the required response times and an average value of the transmission intervals in the process of Fig. 3.

Fig. 7 is a drawing for describing a concept of a retry of the consecutive transmission process.

Fig. 8 is a drawing for describing an outline of a consecutive transmission process according to a modification.

Description of Embodiments

The embodiment of this disclosure discloses that, in an onboard system, during a communication operation between a sender side and a receiver side, the sender side adaptively determines a format of consecutive transmission including a transmission interval and a transmission size used in the consecutive data transmission to the receiver side, and executes the consecutive transmission of data including a plurality of frames (predetermined size) based thereon. Accordingly, the data loss in the receiver side can be avoided.

The following describes embodiments and examples of the present disclosure with reference to the attached drawings. In the attached drawings, functionally the same components may be represented with the same number. Note that while the attached drawings illustrate specific embodiments and exemplary implementations according to the principle of the disclosure, these are for understanding the disclosure, and are never used for interpreting the disclosure in a limited way.

While in these embodiments, its description is made in detail enough for a person skilled in the art to implement the disclosure, other implementations and configurations are also possible, and it should be understood that changes in configurations and structures and replacement of various components are allowed without departing from a scope or a spirit of the technical idea of the disclosure. Accordingly, the subsequent description should not be interpreted in a limiting sense.

<Exemplary Configuration of Onboard Communication System>

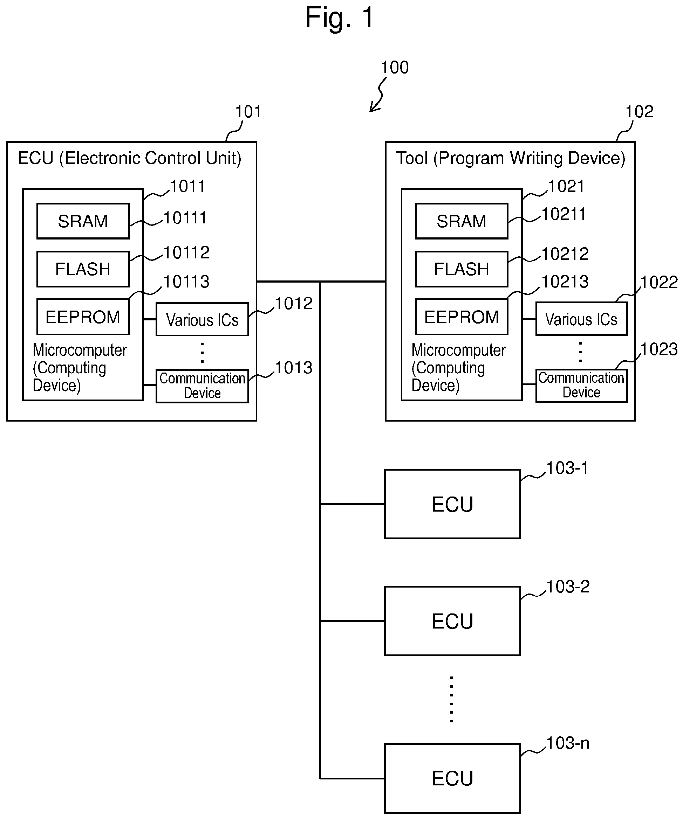

Fig. 1 is a drawing illustrating a schematic configuration example of an onboard communication system 100 according to the embodiment. In Fig. 1, while the onboard communication system 100 is configured by extracting only the parts relating to the technique of this disclosure, components other than the configuration illustrated in Fig. 1 may be included.

The onboard communication system 100 includes an ECU (electronic control unit) 101 set in a sender side in this embodiment, and a tool (reprogramming tool: program writing device) 102 and a plurality of ECUs 103_1 to 103_n, which are different from the ECU 101 in the sender side, set in a receiver side in this embodiment.

The ECU 101 includes a computing device (microcomputer) 1011, various ICs 1012, and a communication device 1013. The computing device 1011 includes at least any one of: an SRAM 10111, a FLASH memory 10112, or an EEPROM 10113, for example, as an internal storage device. The SRAM 10111, the FLASH memory, and the EEPROM 10113 may be provided outside the computing device 1011. The ECU 101 may be communicatively connected to, for example, a server device (not illustrated) or an external storage device (not illustrated).

The tool 102 includes a computing device 1021, various ICs 1022, and a communication device 1023 as internal components similarly to the ECU 101. The computing device 1021 includes at least any one of, for example, an SRAM 10211, a FLASH memory 10212, or an EEPROM 10213 as an internal storage device. Similarly to the ECU 101, the tool 102 may be communicatively connected to a server device (not illustrated) or an external storage device (not illustrated).

The other plurality of ECUs 103_1 to 103_n different from the ECU 101 may have an internal configuration similar to that of the ECU 101.

<Outline of Transmission Interval Determination>

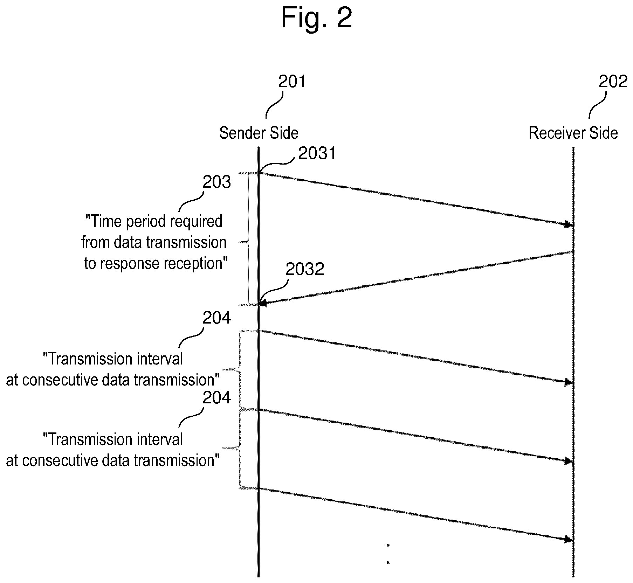

Fig. 2 is a drawing for describing an outline of transmission interval determination at a consecutive data transmission according to the embodiment. In this embodiment, in Fig. 2, the ECU 101 corresponds to a device (sender device) in a sender side 201, and the tool 102 or any of the ECUs 103_1 to 103_n corresponds to a device (receiver device) in a receiver side 202.

When data is consecutively transmitted, a fact of performing consecutive transmission is notified from the sender side 201 to the receiver side 202 in advance. After receiving a permission notification (FlowControl (described below): permission for consecutive transmission) corresponding to the advance notification from the receiver side 202, the sender side 201 executes the consecutive transmission. A period from the advance notification to the approval is a "time period required from the data transmission to the response reception (hereinafter referred to as an "advance notification response time" or a "required response time") 203." The advance notification corresponds to FirstFrame described below, and its communication data contents include information on a specification (method) of the consecutive transmission and includes, for example, a notification (signal) of consecutive transmission start, information on the number of messages to be transmitted, and information on a transmission (communication) format (amount of data transmitted at one time: for example, transmission in 64-byte units or transmission in 8-byte units). For example, the transmission (communication) format may be a standard format and an extended format in CAN (Controller Area Network) communication.

When receiving an ACK from the receiver side 202, the sender side 201 calculates (detects) the advance notification response time (required response time) 203, determines (estimates) a status (processing load status) of the receiver side 202 based thereon, and calculates a "transmission interval 204 at consecutive data transmission." For example, when the advance notification response time 203 is longer than a predetermined time, since the load on the receiver side 202 can be determined to be large, the transmission interval 204 can be set to be longer. A method for determining the transmission interval 204 will be described later in detail.

The sender side 201 repeatedly transmits consecutive frames to the receiver side 202 at the determined transmission interval 204.

As described above, in this embodiment, different from the prior art (for example, ISO15765-2 described above) (in the prior art, the transmission interval is determined to a fixed value before the communication start and cannot be changed thereafter), the advance notification regarding the consecutive transmission is performed between the sender side 201 and the receiver side 202, and the transmission interval 204 is adaptively determined based on the communication result, thus allowing the execution of the consecutive transmission in consideration of the status of the receiver side 202 and attempting maximization of the communication efficiency.

<Detail of Consecutive transmission Process>

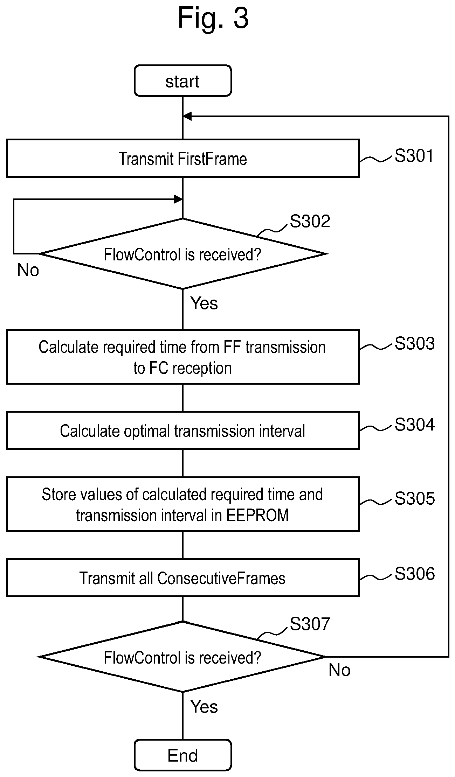

Fig. 3 is a flowchart for describing a consecutive transmission process according to the embodiment in detail. While an operation subject of each step is the sender side 201, that is, the ECU 101, in the technique of this disclosure, the tool 102 also can be used as the sender device, and therefore, in the following description, the operation subject is expressed as the sender side 201.

(i) S301

The sender side 201 transmits a FirstFrame to the receiver side 202 as the advance notification of the consecutive transmission. The FristFrame includes the information on the specification of the consecutive transmission as described above.

(ii) S302

The sender side 201 waits until receiving a FlowControl from the receiver side 202. When the FlowControl is received (Yes in S302), the process proceeds to S303.

(iii) S303

The sender side 201 uses a FirstFrame (FF) transmission time and a FlowControl (FC) reception time to calculate the required response time (advance notification response time 203) from the FF transmission to the FC reception.

(iv) S304

The sender side 201 calculates an optimal transmission interval 204 based on the advance notification response time 203 calculated in S303. Here, the "optimal transmission interval" means a transmission interval in which at least a data loss does not occur (time interval from one ConsecutiveFrame transmission to the next ConsecutiveFrame transmission), and is ordinarily a time period reduced compared with the conventional case insofar as the processing load on the receiver side 202 is not excessive.

(v) S305

The sender side 201 stores the value of the required response time calculated in S303 and the value of the transmission interval calculated in S304 in the EEPROM 10113. The storage destination is not limited to the EEPROM 10113, and may be the SRAM 1011, the FLASH memory 10112, or an external server device or an external storage device (both are not illustrated) via a network.

In the internal storage device (for example, EEPROM 10113) as the storage destination, the value of the required response time and the value of the transmission interval can be stored in separate storage areas for each device of the receiver side 202 (for each calculation).

(vi) S306

The sender side 201 transmits all of the consecutive frames (ConsecutiveFrames) to the receiver side 202 at the transmission interval calculated in S304.

(vii) S307

After transmitting all the ConsecutiveFrames, the sender side 201 determines whether or not the FlowControl is received from the receiver side 202 within a predetermined time. When the FlowControl is received from the receiver side 202 within the predetermined time (Yes in S307), the consecutive transmission process ends. On the other hand, when the FlowControl is not received from the receiver side 202 within the predetermined time (No in S307), the executed consecutive transmission process is determined to be failure, and the process transitions (returns) to S301. When the consecutive transmission process fails, it means that the calculated value of the transmission interval is not appropriate. Therefore, the process returns to S301, and the process to determine the transmission interval is executed again.

<Parameter Storage in Storage Device>

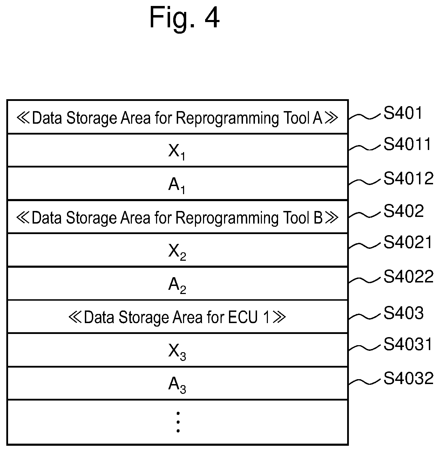

Fig. 4 is a drawing illustrating an example of storage formats of respective parameters in the storage device (for example, EEPROM 10113) of the sender side 201. Here, each parameter can include, for example, the values of the required response time at respective transmissions and the values of the transmission interval at respective consecutive transmissions. An average value of past required response times ($T_{av}$ described below) and an average value of past transmission intervals ($IT_{av}$ described below) may be included.

As illustrated in Fig. 4, the EEPROM 10113 holding the parameters has areas for storing the parameters for the tool 102 and the respective ECUs 103_1 to 103_n. For example, for a reprogramming tool A401, a reprogramming tool B402, and ECUs 1_403, ..., areas X1 to Xn+2 are defined as areas to store the values of the past required response time of the devices, respectively, and areas A1 to An+2 are defined as areas to store the values of the past transmission interval of the devices, respectively. Thus, the EEPROM 10113 has the areas X and A by the number of the devices with which the sender side 201 has a possibility to communicate. While only the reprogramming tool is illustrated as the tool here, an area for another tool (for example, diagnostic tool) may be provided. The parameters can be managed by separating the areas for respective communication conditions (for example, transmission (communication) format: 1 frame is configured by 64 bytes or 8 bytes) to the receiver sides (devices of communication destination).

While the storage device may be the EEPROM 10113 inside the sender side 201 (for example, ECU 101) as described above, the storage device only needs to be a storage device that can hold the storage data even when a power s supply is off, and may be an external storage device or an external server connected to the sender side 201.

<Example of Transmission Interval Calculation>

(i) Example of Using Map (Table)

A map (table) indicating the values of the transmission interval corresponding to the required response time is stored in the internal storage device (SRAM 10111, FLASH memory 10112, or EEPROM 10113) of the sender side 201 (ECU 101) in advance. The value of the transmission interval corresponding to the required response time calculated by the sender side 201 in S303 can be acquired from the map, and used as the optimal transmission interval. It may be a configuration in which a multiplication coefficient is simply stored in the internal storage device. In this case, the transmission interval can be obtained by multiplication coefficient × calculated required response time.

(ii) Example of Using Average Value of Required Response Times Up to Present Time and Average Value of Transmission Intervals Up to Present Time

By using the average values of the required response time and the average values of the transmission interval of the respective receiver devices stored in the internal storage device, the external server, or the like of the sender side 201, a current transmission interval can be determined. For example, the current transmission interval can be obtained according to a formula (1) below.

$$\text{Current transmission interval } IT_p = (T_p/T_{av}) \times IT_{av} \ \dots \ (1)$$

Here, $IT_p$ is a current transmission interval to be determined, $T_p$ is a current required response time, $T_{av}$ is the average value of the past required response times of the receiver device, and $IT_{av}$ is the average value of the past transmission intervals of the receiver device.

(iii) Specific Example of Transmission Interval Calculation

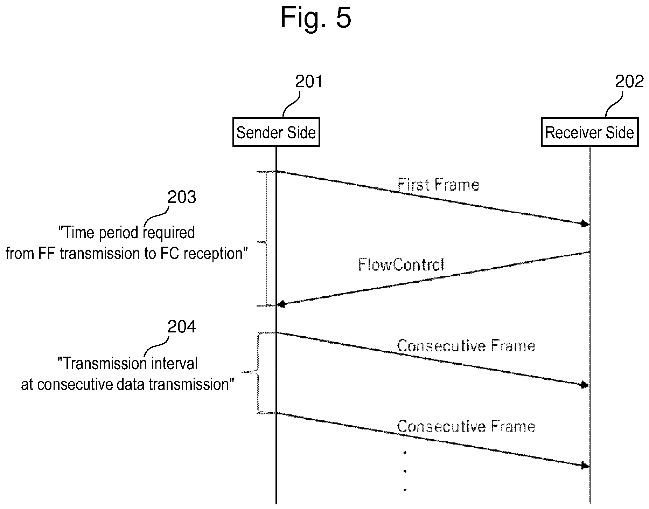

Fig. 5 is a drawing illustrating the current required response time (required response time 203 from FirstFrame transmission to FlowControl reception) and the current transmission interval (transmission interval 204 at consecutive data transmission) determined from the formula (1).
For example, when $T_p$ is 1.5 ms, $T_{av}$ is 1.0 ms, and $IT_{av}$ is 2 ms, $IT_p$ is (1.5 ms/1.0 ms) $\times$ 2.0 ms = 3 ms. When $T_p$ is 0.8 ms, $T_{av}$ is 1.0 ms, and $IT_{av}$ is 2 ms, $IT_p$ is (0.8 ms/1.0 ms) $\times$ 2.0 ms = 1.6 ms. Thus, it is found that the transmission interval can be obtained based on the transmission interval (average) in the communication load status (average) in the past also in consideration of the current communication load status.

<Consecutive Transmission Process Including Recalculation Process and Storing Process of Required Response Time Average Value and Transmission Interval Average Value>

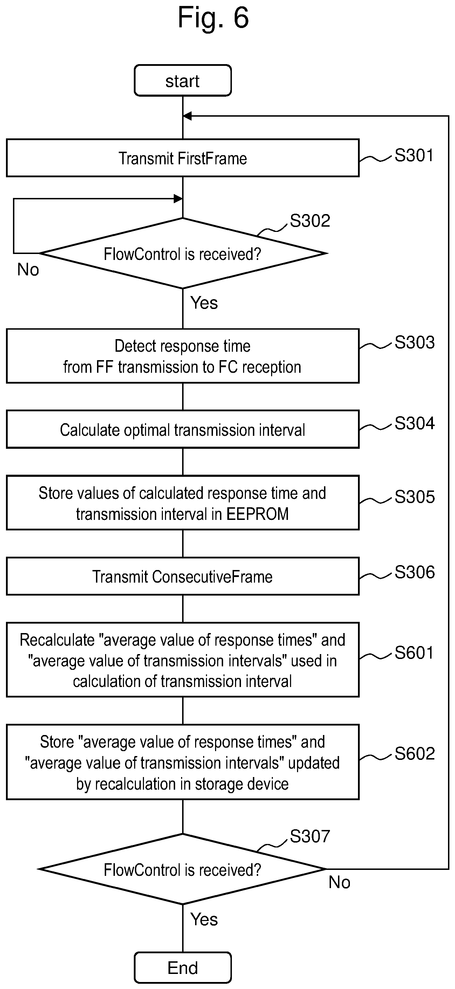

Fig. 6 is a flowchart for describing a consecutive transmission process including a recalculation process and a storing process of the average value of the required response times and the average value of the transmission intervals in the process of Fig. 3.

(i) S301 to S306

The processes from S301 to S306 are as described in the explanation of Fig. 3.

(ii) S601

The sender side 201 calculates an average value of the required response times up to the present time using the value of the current required response time calculated in S303, the average value of the required response times up to the previous time (previous consecutive transmission), and the value of the number of times of the consecutive transmission. The sender side 201 calculates an average value of the transmission intervals up to the present time using the value of the current transmission interval calculated in S304, the average value of the transmission intervals up to the previous time (previous consecutive transmission), and the value of the number of times of the consecutive transmission. These values are used in the calculation of the transmission interval at the next consecutive transmission.

(iii) S602

The sender side 201 stores the average value of the required response times and the average value of the transmission intervals obtained in S601 in the storage device (for example, EEPROM 10113). When the information is stored, as illustrated in Fig. 4, the information is stored in areas in the storage device determined for the respective devices (for example, tool 102 and ECUs 103_1 to 103_n) of the receiver side 202 as the communication target.

(iv) S307

The sender side 201 determines whether or not the FlowControl is received from the receiver side 202 within a predetermined time. When the FlowControl is received within the predetermined time (Yes in S307), the consecutive transmission process ends. When the FlowControl cannot be received within the predetermined time (No in S307), the process transitions to S301. In this case, the transmission interval is calculated again in S304, and the transmission interval is calculated again using the latest required response time average value and transmission interval average value calculated in S601.

<Example of Transmission Interval Calculation at Retry>

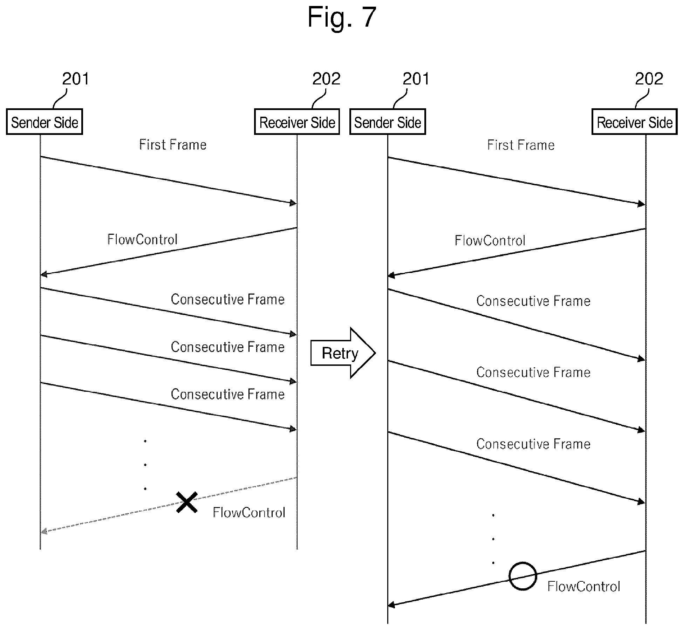

Fig. 7 is a drawing for describing a concept of a retry of the consecutive transmission process. Even when the consecutive transmission is performed once at the determined transmission interval, in a case where the sender side 201 cannot receive the FlowControl from the receiver side 202, the consecutive transmission process is retried. While the processes of S301 to S306 in the case of No in S307 are executed again according to Fig. 6, it is not limited thereto, and an additional transmission interval can be calculated according to a formula (2) by introducing a condition coefficient and a failure experience coefficient.

Transmission interval = previous transmission interval $\times$ condition coefficient $\times$ failure experience coefficient ... (2)

$$\text{(2)}$$

(i) Selection Rule of Condition Coefficient

After the failure of the consecutive transmission process, the sender side 201 calculates a time period until a FlowControl to a FirstFrame transmitted again to the receiver side 202 is received, that is, the required response time again, and selects the condition coefficient that differs depending on whether or not it is equal to or less than a threshold value. In the case of equal to or less than the threshold value, the receiver side 202 is in a state where the retry can be performed immediately after the consecutive transmission failure, and otherwise, in a state where the retry cannot be immediately performed. For example, for the threshold value used here, since the ordinary required response time can be estimated from past communication history information (for example, average value, average value after excluding extreme values, and the like), the information can be used as the threshold value.

(i-1) Case Where Required Response Time Is Equal to or Less Than Threshold Value: Case Where Retry Can Be Immediately Performed

In this case, the condition coefficient is assumed as $\alpha$, and a relatively low value (however, 1.0 or more) can be employed. For example, the condition coefficient $\alpha$ can be set to 1.2.

(i-2) Case Where Required Response Time Is Larger Than Threshold Value: Case Where Retry Cannot Be Immediately Performed after Failure

In this case, the condition coefficient is assumed as $\beta$, and a value larger than the condition coefficient $\alpha$ is employed. For example, the condition coefficient $\beta$ can be set to 1.5.

As described above, when the retry cannot be performed immediately after the consecutive transmission process failure, since it can be determined that the increased processing load reduces the receiving capability of the receiver side 202, the value is set in a relation of $\alpha < \beta$.

(ii) Selection Rule of Failure Experience Coefficient $\gamma$

The failure experience coefficient is assumed as $\gamma$, and the number of times of consecutive failure can be employed. For example, in the failure for the first time, $\gamma = 1$ can be set, and at the two consecutive failures, $\gamma = 2$ can be set.

As described above, when the retry is performed after the consecutive failures, the transmission interval is set to be larger every time the retry is performed.

(iii) Example of Transmission Interval Calculation at Retry

In the case where the required response time of the receiver side 202 after the consecutive transmission process failure is equal to or less than the threshold value, and the failure is the first time, the transmission interval can be obtained from the formula (2) having $\alpha = 1.2$, $\gamma = 1$ by previous transmission interval $\times$ condition coefficient $\alpha$ (1.2) $\times$ failure experience coefficient $\gamma$ (1) = previous transmission interval $\times$ 1.2.

In the case where the required response time of the receiver side 202 after the consecutive transmission process failure is larger than the threshold value, and the failure is consecutively made three times, the transmission interval can be obtained from the formula (2) having $\beta = 1.5$, $\gamma = 3$ by previous transmission interval $\times$ condition coefficient $\beta$ (1.5) $\times$ failure experience coefficient $\gamma$ (3) = previous transmission interval $\times$ 4.5.

<Modification>

(i) Modification 1

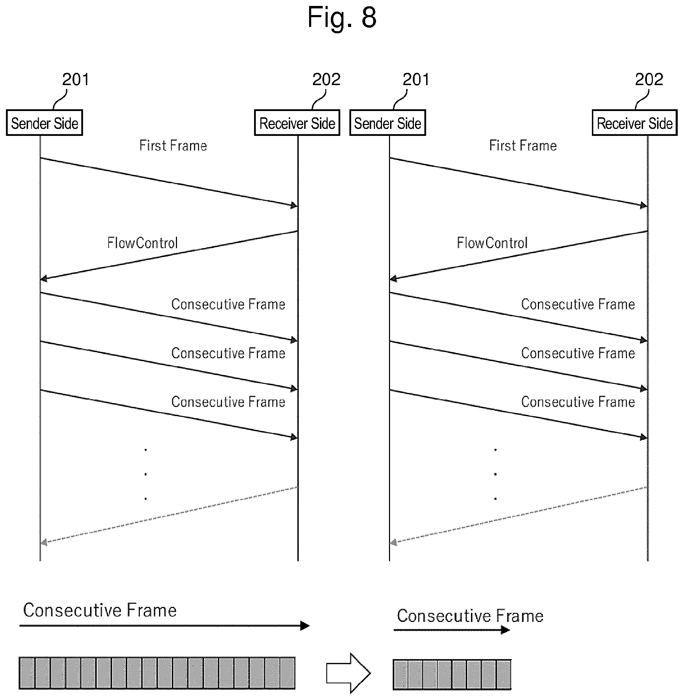

Fig. 8 is a drawing for describing an outline of a consecutive transmission process according to a modification. While the optimal transmission interval is set corresponding to the processing status (communication load and the like) of the receiver side 202 for each consecutive transmission process based on the required response time of the receiver side 202 in the above-described embodiment, the method of the consecutive transmission process corresponding to the communication load of the receiver side 202 is not limited to this. For example, an optimal transmission size (for one transmission) corresponding to the processing status of the receiver side 202 during the communication can be calculated and set based on the required response time. In this case, a fixed value can be employed for the transmission interval.

As illustrated in Fig. 8, when the receiver side 202 has a margin in the process status, the value of transmission size for one transmission is set to be large (for example, 64 bytes: see left side drawing in Fig. 8), and when the load on the receiver side 202 is high, the transmission size for one transmission is set to be small (for example, 8 bytes: see right side drawing in Fig. 8).

For example, similarly to the transmission interval, by preparing a map (table) that specifies the transmission size corresponding to the required response time in advance, the transmission size corresponding to the required response time detected at this time can be determined. Alternatively, the transmission size for one transmission may be set to 64 bytes when the required response time is equal to or less than a predetermined threshold value (for example, 5 ms), and the transmission size for one transmission may be set to 8 bytes when the required response time is larger than the predetermined threshold value.

(ii) Modification 2

While the first consecutive transmission process is executed with the transmission interval determined (calculated) based on the required response time and preliminarily determined transmission size (transmission format) (adaptive control of transmission interval), the consecutive transmission process at the retry may be executed with the transmission size (determined by the above-described method of the modification 1) determined (calculated) based on the transmission interval at the first consecutive transmission (at the consecutive transmission failure) and the required response time (required response time calculated separately from that at the first consecutive transmission) calculated (detected) again. Conversely, that is, the first consecutive transmission process may be executed with the transmission size determined based on the required response time, and the consecutive transmission process at the retry may be executed with the changed transmission interval.

<Summary>

(i) According to the embodiment, the sender side 201 (sender device) performs the initial communication (FirstFrame transmission and FlowControl reception) with the receiver side 202 (receiver device), confirms the response time (required response time) of the receiver side 202, and determines the format (transmission interval and transmission size) of the consecutive transmission of the data including a plurality of frames to the receiver side 202 based on the response time. Then, the sender side 201 consecutively transmits the data in units of frame to the receiver side 202 according to the determined format of the consecutive transmission. Accordingly, compared with the prior art in which the transmission interval (fixed value) is determined before the communication start and the consecutive transmission is performed using this transmission interval regardless of the communication status, the possibility of data loss occurrence can be considerably reduced. Since the transmission interval of the fixed value includes a large margin to avoid the loss, it takes a relatively long time to end the consecutive transmission process. On the other hand, according to the embodiment, since the transmission interval and the transmission size in the consecutive transmission are adaptively determined in consideration of the current load status of the receiver side 202, the consecutive transmission can be executed with the optimal transmission interval and transmission size. Accordingly, the consecutive transmission can be completed in a time period shorter than the conventional consecutive transmission using the fixed value. For example, when 1 kilobytes of data is transmitted by 8 bytes for one transmission (one frame), the number of times of the transmission is 1 kilobytes/8 bytes = 12500 times, the number of the transmission intervals is 12500 - 1 = 12499 times. When the transmission interval is set to 2 ms including the margin (fixed value regardless of the load status of the receiver side 202) in the conventional method, the time period required to complete the consecutive transmission is number of transmission intervals × transmission interval = 12499 times × 2 ms = 24998 ms = 24.9 s. On the other hand, according to the embodiment, when the transmission interval is calculated to be 1 ms based on the condition of the receiver side 202, the time period required to complete the consecutive transmission is number of transmission intervals × transmission interval = 12499 times × 1 ms = 12499 ms = 12.9 s, and it is found that it can be reduced to almost the half of the conventional one.

(ii) The sender side 201 stores the information (value) on the response time and the information (value of the transmission interval or value of transmission size) on the determined format of the consecutive transmission in storage areas separated for each of the receiver side 202 (see Fig. 4) of at least one (any one or both) of the internal storage device (EEPROM or the like) or the external storage device (externally provided storage device or server device). The internal storage device and the external storage device are preferably storage devices that can hold the stored data even when the power supply of the sender side 201 is off. The storing in the storage area of the storage device is performed every time the format (transmission interval and transmission size) of the consecutive transmission is determined. Thus, by accumulating the information on the calculated format of the consecutive transmission, it can be referred to when the format of the consecutive transmission executed later is determined, and the appropriate format can be determined.

(iii) The sender side 201 calculates the average value of the required response times and the average value of the transmission intervals, and stores the average value of the required response times and the average value of the transmission intervals (or the transmission size) in the storage areas separated for each device of the receiver side 202 of at least one of the internal storage device or the external storage device every time the consecutive transmission is completed. Accordingly, the current transmission interval and transmission size can be determined using the average value of the required response times and the average value of the transmission intervals (or the transmission size). Specifically, the current transmission interval can be calculated by dividing the current required response time by the average value of the past required response times and multiplying the result thereof by the average value of the past transmission intervals. The current transmission size used instead of the transmission interval can be calculated by dividing the current required response time by the average value of the past required response times and multiplying the result thereof by the average value of the past transmission sizes.

(iv) In the onboard communication system 100 according to the embodiment, the retry process is executed when the consecutive transmission fails. For the retry process, for example, after the current consecutive transmission is completed, the sender side 201 determines whether or not a reception completion response (FlowControl) indicating the completion of receiving all the data has been received from the receiver side 202, and when the reception completion response fails to be received, the sender side 201 changes the transmission interval (extends the transmission interval) and retries the consecutive transmission. When the transmission size is changed, the consecutive transmission failure can be dealt with by reducing the previous transmission size.

The transmission interval at the retry can be calculated by multiplying the condition coefficient that differs depending on whether or not the required response time (time period from the FirstFrame transmission to the FlowControl reception) after the failure of the reception completion response (FlowControl) reception is equal to or less than the predetermined threshold value (for example, when it is equal to or less than the threshold value, the condition coefficient = 1.2, when it is larger than the threshold value, the condition coefficient = 1.5), the number of times of the consecutive failure of the reception completion response (FlowControl) reception, and the previous transmission interval. Accordingly, the next transmission interval can be determined in consideration of the current load status of the receiver side 202 and the peculiar situation of the consecutive failure. For the transmission size, the transmission size at the retry may be reduced by setting the condition coefficient = 0.8 in the case where the required response time at the failure of the reception completion response (FlowControl) reception is equal to or less than the predetermined threshold value and setting the condition coefficient = 0.6 in the case of being larger than the threshold value, and multiplying it and 1 as the number of times of the consecutive failure by the previous transmission size.

(v) The functions of the embodiment and the respective examples can also be realized by software program code. In this case, a storage medium storing the program code is provided to the system or device, and the computer (or CPU or MPU) of the system or device reads the program code stored on the storage medium. In this case, the program code itself read from the storage medium will realize the functions of the above-described embodiment, and the program code itself and the storage medium that holds it will constitute the present disclosure. Examples of the storage media for supplying such program code include flexible disks, CD-ROMs, DVD-ROMs, hard disks, optical disks, magneto-optical disks, CD-Rs, magnetic tapes, non-volatile memory cards, and ROMs.

In addition, based on the instructions in the program code, the operating system (OS) running on the computer may perform some or all of the actual processing, and the functions of the above-described embodiment may be realized through this processing. Furthermore, after the program code read from the storage medium has been written to the memory of the computer, the CPU of the computer or other components may perform some or all of the actual processing based on the instructions in the program code, and the functions of the above-described embodiment may be realized through this processing.

Furthermore, by distributing the software program code that realizes the functions of the embodiment and the respective examples via a network, it is also possible to store it in the storage means of the system or device, such as the hard disk or memory, or in the storage media, such as CD-RW or CD-R, and have the computer (or CPU or MPU) of the system or device read and execute the program code stored in the storage means or storage media when it is used.

The processes and techniques described herein are not inherently tied to any particular device and can be implemented by combinations of components. Furthermore, various types of general purpose devices can be added. To execute the functions of the embodiment and the respective examples, a dedicated device may be constructed. In addition, various functions can be formed by combining the plurality of components disclosed in the embodiment and the respective examples as appropriate. For example, some of the components may be removed from all the components illustrated in the embodiment and the respective examples. Furthermore, the components across different examples can be combined as appropriate.

This disclosure has been described specific examples, but these are for explanation (understanding the technique of this disclosure) and not for the purpose of limitation in any way. It is expected that those who have common knowledge in the art can understand that there are many combinations of hardware, software, and firmware appropriate for implementing the present disclosure. For example, the described software may be implemented in a wide range of programming or scripting languages, such as assembler, C/C++, Perl, Shell, PHP, Java (TM), and the like.

Furthermore, in the above-described embodiment, the control lines and information lines are illustrated as being necessary for explanation, and not necessarily all the control lines and the information lines are illustrated on the product. All components may be interconnected.

In addition, those who have common knowledge in the art can make other implementations of the present disclosure apparent from consideration of the embodiment and the respective examples. Description and specific examples are merely typical, and the technical scope and spirit of the present disclosure will be indicated in the following claims.

Reference Signs List

100 Onboard communication system
101 ECU (electronic control unit)
102 Tool (program writing device)
103_1 to 103_n ECU
1011 Computing device (microcomputer)
1012 Various IC
1013 Communication device
10111, 10211 SRAM
10112, 10212 FLASH memory
10113, 10213 EEPROM
201 Sender side
202 Receiver side
203 Required response time (time period required from data transmission to response reception)
204 Transmission interval

**Claims**

1. An onboard communication system that consecutively transmits data including a plurality of frames from a sender device to a receiver device in a communication at one time,
   wherein the sender device executes:

   a process of performing an initial communication with the receiver device and confirming a response time of the receiver device;
   a process of determining a format of the consecutive transmission of the data to the receiver device based on the response time; and
   a process of consecutively transmitting the data to the receiver device in units of frame according to the determined format of the consecutive transmission.

2.  The onboard communication system according to claim 1,
    wherein the sender device determines a data transmission interval in each unit of frame in the consecutive transmission as the format of the consecutive transmission based on information on the response time.

3.  The onboard communication system according to claim 1,
    wherein the sender device confirms the response time by a message transmission to the receiver device and a response reception from the receiver device in the initial communication.

4.  The onboard communication system according to claim 1,
    wherein the sender device executes a process of storing information on the response time and information on the determined format of the consecutive transmission in storage areas separated for each of the receiver devices of at least one of an internal storage device provided inside the sender device or an external storage device provided outside the sender device.

5.  The onboard communication system according to claim 4,
    wherein the internal storage device and the external storage device are storage devices configured to hold stored data even when a power supply is off.

6.  The onboard communication system according to claim 4,
    wherein the sender device stores the information on the response time and the information on the format of the consecutive transmission in the storage areas for each of the receiver devices every time the format of the consecutive transmission is determined.

7.  The onboard communication system according to claim 2,
    wherein the sender device further executes a process of calculating an average value of the response times and an average value of the data transmission intervals.

8.  The onboard communication system according to claim 7,
    wherein the sender device further executes a process of storing information on the average value of the response times and information on the average value of the data transmission intervals in storage areas separated for each of the receiver devices of at least one of an internal storage device provided inside the sender device or an external storage device provided outside the sender device every time the consecutive transmission is completed.

9.  The onboard communication system according to claim 8,
    wherein the sender device calculates a current data transmission interval using a current response time, an average value of past response times, and an average value of past data transmission intervals.

10. The onboard communication system according to claim 2,
    wherein the sender device further executes:

    a process of determining whether or not a reception completion response indicating a completion of receiving all the data has been received from the receiver device after the consecutive transmission is completed; and
    a process of retrying the consecutive transmission with the data transmission interval changed when the reception completion response fails to be received.

11. The onboard communication system according to claim 10,
    wherein the sender device retries the consecutive transmission by extending the data transmission interval.

12. The onboard communication system according to claim 11,
    wherein the sender device calculates the data transmission interval at the retry of the consecutive transmission using the data transmission interval changed by multiplying a condition coefficient that differs depending on whether or not the response time after the failure of the reception completion response reception is equal to or less than a predetermined threshold value, a number of times of the consecutive failure of the reception completion response reception, and the data transmission interval at a previous time.

13. The onboard communication system according to claim 12,
    wherein the condition coefficient is 1.0 or more, and the condition coefficient when the response time is equal to or less than the predetermined threshold value is smaller than the condition coefficient when the response time is larger than the predetermined threshold value.

14. The onboard communication system according to claim 1,
wherein the sender device determines a data transmission size in each unit of frame in the consecutive transmission as the format of the consecutive transmission based on information on the response time.

15. An onboard communication method for consecutively transmitting data including a plurality of frames from a sender device in a vehicle to a receiver device in the vehicle in a communication at one time, the onboard communication method comprising:

performing an initial communication with the receiver device and transmitting a message to the receiver device by the sender device;
returning a response to approve a content of the message to the sender device by the receiver device;
calculating a response time that is a time period from the message transmission to a reception of the response by the sender device;
determining a format of the consecutive transmission of the data to the receiver device based on the response time by the sender device; and
consecutively transmitting the data to the receiver device in units of frame according to the determined format of the consecutive transmission by the sender device.

# Fig. 1

100

101

102

ECU (Electronic Control Unit)

1011

SRAM — 10111

FLASH — 10112

EEPROM — 10113

Various ICs — 1012

Communication Device — 1013

Microcomputer (Computing Device)

Tool (Program Writing Device)

1021

SRAM — 10211

FLASH — 10212

EEPROM — 10213

Various ICs — 1022

Communication Device — 1023

Microcomputer (Computing Device)

ECU — 103-1

ECU — 103-2

ECU — 103-n

# Fig. 2

# Fig. 3

```
                    ┌──────────────┐
                    │    start     │
                    └──────┬───────┘
                           │
      ┌────────────────────┼────────────────────────────┐
      │                    ▼                             │
  ┌───────────────────────────────────────┐             │
  │        Transmit FirstFrame             │───S301      │
  └───────────────────┬───────────────────┘             │
                      │                                  │
      ┌───────────────┼──────┐                           │
      │               ▼      │                           │
      │         ╱──────────────╲      S302                │
      │        ╱                ╲                         │
      └───────╱  FlowControl is  ╲                       │
       No      ╲   received?     ╱                        │
               ╲                ╱                         │
                ╲──────────────╱                          │
                      │ Yes                               │
                      ▼                                   │
  ┌───────────────────────────────────────┐              │
  │  Calculate required time from FF       │───S303       │
  │  transmission to FC reception          │              │
  └───────────────────┬───────────────────┘              │
                      │                                   │
  ┌───────────────────────────────────────┐              │
  │  Calculate optimal transmission        │───S304       │
  │  interval                              │              │
  └───────────────────┬───────────────────┘              │
                      │                                   │
  ┌───────────────────────────────────────┐              │
  │  Store values of calculated required   │───S305       │
  │  time and transmission interval in     │              │
  │  EEPROM                                │              │
  └───────────────────┬───────────────────┘              │
                      │                                   │
  ┌───────────────────────────────────────┐              │
  │  Transmit all ConsecutiveFrames        │───S306       │
  └───────────────────┬───────────────────┘              │
                      │                                   │
                      ▼       S307                        │
               ╱──────────────╲                          │
              ╱                ╲        No                │
             ╱  FlowControl is  ╲─────────────────────────┘
             ╲   received?     ╱
              ╲                ╱
               ╲──────────────╱
                      │ Yes
                      ▼
               ┌──────────────┐
               │     End      │
               └──────────────┘
```

# Fig. 4

| | |
|---|---|
| ≪Data Storage Area for Reprogramming Tool A≫ | S401 |
| $X_1$ | S4011 |
| $A_1$ | S4012 |
| ≪Data Storage Area for Reprogramming Tool B≫ | S402 |
| $X_2$ | S4021 |
| $A_2$ | S4022 |
| ≪Data Storage Area for ECU 1≫ | S403 |
| $X_3$ | S4031 |
| $A_3$ | S4032 |
| ⋮ | |

## Fig. 5

201

Sender Side

202

Receiver Side

First Frame

203

"Time period required
from FF transmission to FC reception"

FlowControl

204

"Transmission interval
at consecutive data transmission"

Consecutive Frame

Consecutive Frame

# Fig. 6

```
                        ┌──────────┐
                        │  start   │
                        └────┬─────┘
                             │ ◄───────────────────────┐
        ┌────────────────────┴────────────────────┐    │
        │         Transmit FirstFrame              │～S301│
        └────────────────────┬────────────────────┘    │
                             │                          │
         ┌───────────────────▼──────────── S302         │
         │                                              │
    No  ◄─┤        FlowControl is received?             │
         │                                              │
          └──────────────────┬───────────────          │
                             │ Yes                      │
        ┌────────────────────┴────────────────────┐    │
        │       Detect response time              │～S303│
        │   from FF transmission to FC reception   │    │
        └────────────────────┬────────────────────┘    │
                             │                          │
        ┌────────────────────┴────────────────────┐    │
        │   Calculate optimal transmission interval│～S304│
        └────────────────────┬────────────────────┘    │
                             │                          │
        ┌────────────────────┴────────────────────┐    │
        │  Store values of calculated response     │～S305│
        │  time and transmission interval in EEPROM│    │
        └────────────────────┬────────────────────┘    │
                             │                          │
        ┌────────────────────┴────────────────────┐    │
        │       Transmit ConsecutiveFrame          │～S306│
        └────────────────────┬────────────────────┘    │
                             │                          │
        ┌────────────────────┴────────────────────┐    │
        │ Recalculate "average value of response   │    │
        │ times" and "average value of transmission│～S601│
        │ intervals" used in calculation of        │    │
        │ transmission interval                    │    │
        └────────────────────┬────────────────────┘    │
                             │                          │
        ┌────────────────────┴────────────────────┐    │
        │ Store "average value of response times"  │    │
        │ and "average value of transmission       │～S602│
        │ intervals" updated by recalculation in   │    │
        │ storage device                           │    │
        └────────────────────┬────────────────────┘    │
                             │                          │
         ┌───────────────────▼──────────── S307         │
         │                                              │
         │        FlowControl is received?           ├─ No ┘
         │                                              
          └──────────────────┬───────────────          
                             │ Yes                      
                        ┌────┴─────┐
                        │   End    │
                        └──────────┘
```

## Fig. 7

# Fig. 8

**EP 4 561 012 A1**

## INTERNATIONAL SEARCH REPORT

| International application No. |
|---|
| **PCT/JP2022/028066** |

| A. | CLASSIFICATION OF SUBJECT MATTER |
|---|---|

*H04L 47/283*(2022.01)i
FI:   H04L47/283

According to International Patent Classification (IPC) or to both national classification and IPC

| B. | FIELDS SEARCHED |
|---|---|

Minimum documentation searched (classification system followed by classification symbols)

H04L47/283

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-225791 A (DENSO CORP) 28 December 2016 (2016-12-28) | 1, 3, 14-15 |
|   | abstract, claim 7, paragraph [0022] |  |
| A | abstract, claim 7, paragraph [0022] | 2, 4-13 |
| A | JP 2014-204314 A (DENSO CORP) 27 October 2014 (2014-10-27) | 1-15 |
|   | entire text, all drawings |  |
| A | JP 2019-75840 A (MITSUBISHI ELECTRIC CORP) 16 May 2019 (2019-05-16) | 1-15 |
|   | entire text, all drawings |  |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2022** | **11 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

21

**INTERNATIONAL SEARCH REPORT**
Information on patent family members

International application No.

**PCT/JP2022/028066**

| Patent document cited in search report | | | Publication date (day/month/year) | Patent family member(s) | Publication date (day/month/year) |
|---|---|---|---|---|---|
| JP | 2016-225791 | A | 28 December 2016 | US 2016/0352639 A1 abstract, claim 7, paragraphs [0041]-[0044] | |
| JP | 2014-204314 | A | 27 October 2014 | (Family: none) | |
| JP | 2019-75840 | A | 16 May 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Road vehicles - Diagnostic communication over Controller Area Network (DoCAN) - Part 2: Transport protocol and network layer services. ISO 15765-2. 01 April 2016